(19) **Europäisches Patentamt / European Patent Office / Office européen des brevets**

(11) **EP 4 451 497 A1**

(12) **EUROPEAN PATENT APPLICATION**

(43) Date of publication:
**23.10.2024 Bulletin 2024/43**

(21) Application number: **23168219.6**

(22) Date of filing: **17.04.2023**

(51) International Patent Classification (IPC):
**H02J 3/14** $^{(2006.01)}$     **H02J 3/28** $^{(2006.01)}$

(52) Cooperative Patent Classification (CPC):
**H02J 3/144; H02J 3/28;** H02J 2310/50

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Kabushiki Kaisha Toshiba**
  **Minato-ku,**
  **Tokyo (JP)**

• **Toshiba Energy Systems & Solutions Corporation**
  **Saiwai-ku**
  **Kawasaki-shi**
  **Kanagawa (JP)**

(72) Inventors:
• **AKIBA, Takashi**
  **Kawasaki-shi, Kanagawa (JP)**
• **YAMANE, Fumiyuki**
  **Kawasaki-shi, Kanagawa (JP)**

(74) Representative: **Hoffmann Eitle**
**Patent- und Rechtsanwälte PartmbB**
**Arabellastraße 30**
**81925 München (DE)**

(54) **ENERGY MANAGEMENT SYSTEM**

(57) To provide an energy management system capable of easily implementing efficient energy generation, energy supply, and so on. An energy management system in an embodiment includes an information acquisition part and a planning part. The information acquisition part acquires information including procured electric power information regarding an electric power supply part which procures electric power and supplies the procured electric power, gas conversion information regarding a plurality of electric power gas conversion parts which produce gas using the electric power supplied from the electric power supply part, and gas demand information regarding a plurality of gas demand parts which are supplied with the gas from the plurality of electric power gas conversion parts. The planning part creates an electric power distribution plan regarding the electric power to be distributed from the electric power supply part to the plurality of electric power gas conversion parts and a gas distribution plan regarding the gas to be distributed from the plurality of electric power gas conversion parts to the plurality of gas demand parts so that an evaluation value evaluated based on the information acquired by the information acquisition part becomes an optimum value.

FIG.1

**Description**

FIELD

Embodiments of the present invention relate to an energy management system.

BACKGROUND

An energy management system is provided to stabilize the supply of energy. For example, the energy management system is configured to control the operation of an electric power gas conversion part which produces gas such as hydrogen gas using electric power supplied from an electric power supply part to thereby manage energy such as hydrogen energy.

CITATION LIST

PATENT LITERATURE

Patent Document 1: Japanese Patent Laid-Open Publication No. 2018-142239
Patent Document 2: Japanese Patent Laid-Open Publication No. 2018-066549

SUMMARY OF INVENTION

TECHNICAL PROBLEM

The energy management system preferably manages the operation of each of a plurality of electric power gas conversion parts, for example, while linking the plurality of electric power gas conversion parts in order to efficiently perform energy generation, energy supply, and so on. However, in the prior art, because the linking is insufficient, it is sometimes difficult to efficiently perform the energy generation, the energy supply, and so on.
Therefore, a problem to be solved by the present invention is to provide an energy management system capable of easily implementing efficient energy generation, energy supply, and so on.

SOLUTION TO PROBLEM

An energy management system in an embodiment includes an information acquisition part and a planning part. The information acquisition part acquires information including procured electric power information regarding an electric power supply part which procures electric power and supplies the procured electric power, gas conversion information regarding a plurality of electric power gas conversion parts which produce gas using the electric power supplied from the electric power supply part, and gas demand information regarding a plurality of gas demand parts which are supplied with the gas from the plurality of electric power gas conversion parts. The planning part creates an electric power distribution plan regarding the electric power to be distributed from the electric power supply part to the plurality of electric power gas conversion parts and a gas distribution plan regarding the gas to be distributed from the plurality of electric power gas conversion parts to the plurality of gas demand parts so that an evaluation value evaluated based on the information acquired by the information acquisition part becomes an optimum value.

BRIEF DESCRIPTION OF THE DRAWINGS

FIG. 1 is a block diagram schematically illustrating the overall configuration including an energy management system 1 according to a first embodiment.
FIG. 2 is a block diagram schematically illustrating the energy management system 1 according to the first embodiment.
FIG. 3 is a block diagram schematically illustrating the overall configuration including an energy management system 1 according to a second embodiment.
FIG. 4 is a block diagram schematically illustrating the energy management system 1 according to the second embodiment.

FIG. 5 is a chart schematically illustrating a plan target period for which a planning part 14 of an energy management system 1 according to a third embodiment creates plans.

DETAILED DESCRIPTION

<First Embodiment>

[A] Overall configuration

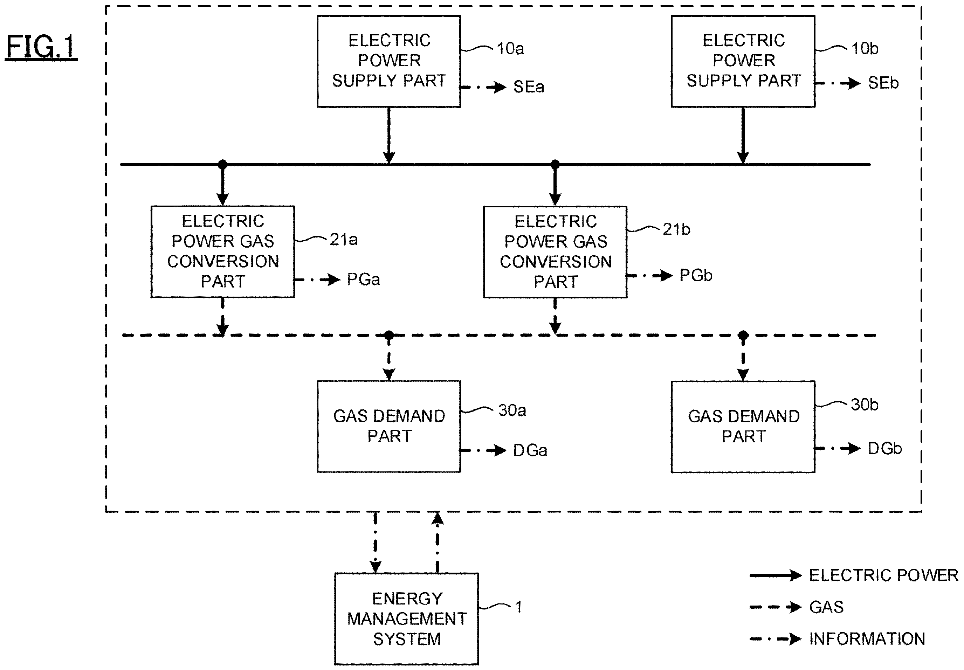

FIG. 1 is a block diagram schematically illustrating the overall configuration including an energy management system 1 according to a first embodiment. In FIG. 1, a solid arrow indicates the flow of electric power, a broken arrow indicates the flow of gas, and a one-doted chain line indicates the flow of information.

[A-1] Electric power supply parts 10a, 10b

Each of a plurality of electric power supply parts 10a, 10b is provided to procure electric power and supply the procured electric power. Each of the plurality of electric power supply parts 10a, 10b includes, for example, a power station such as a thermal power station, a renewable energy power station, or the like. In addition to this, each of the plurality of electric power supply parts 10a, 10b may include a power storage device which stores electric power. Each of the plurality of electric power supply parts 10a, 10b is configured to supply electric power to each of a plurality of electric power gas conversion parts 21a, 21b, for example, via an electric power system interconnection line.

[A-2] Electric power gas conversion parts 21a, 21b

The plurality of electric power gas conversion parts 21a, 21b are provided to produce gas using the electric power supplied from the plurality of electric power supply parts 10a, 10b. Each of the plurality of electric power gas conversion parts 21a, 21b includes, for example, a hydrogen electrolysis device and a storage tank, and is configured such that the hydrogen electrolysis device electrolyzes water to produce hydrogen gas and the storage tank stores the produced hydrogen gas. In addition, each of the plurality of electric power gas conversion parts 21a, 21b may be configured to liquefy the hydrogen gas produced as above and store the liquefied hydrogen. The plurality of electric power gas conversion parts 21a, 21b are configured to supply gas to each of a plurality of gas demand parts 30a, 30b via, for example, a gas distribution network.

[A-3] Gas demand parts 30a 30b

The plurality of gas demand parts 30a, 30b are configured to consume the gas produced in the plurality of electric power gas conversion parts 21a, 21b. The gas demand parts 30a, 30b are configured, for example, to burn gas to perform heating and so on.

[A-4] Energy management system 1

The energy management system 1 is configured to receive information from parts such as the plurality of electric power supply parts 10a, 10b, the plurality of electric power gas conversion parts 21a, 21b, and the plurality of gas demand parts 30a, 30b, and output information to the parts.

[B] Configuration of the energy management system 1

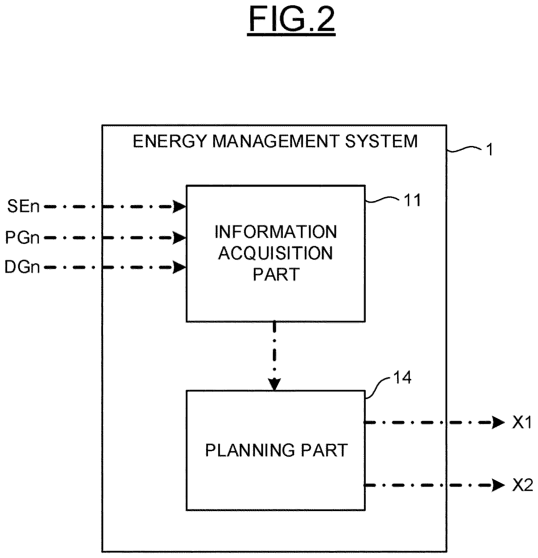

FIG. 2 is a block diagram schematically illustrating the energy management system 1 according to the first embodiment.
The energy management system 1 in this embodiment has, as illustrated in FIG. 2, an information acquisition part 11 and a planning part 14.

[B-1] Information acquisition part 11

In the energy management system 1, the information acquisition part 11 is configured, as illustrated in FIG. 2, to acquire information including procured electric power information SEn, gas conversion information PGn, and gas demand information DGn. The information acquisition part 11 includes, for example, a storage device such as a memory, and stores the information acquired as above in the storage device.

The procured electric power information SEn is information SEa, SEb (see FIG. 1) regarding the plurality of electric power supply parts 10a, 10b which procure electric power and supply the procured electric power.

The gas conversion information PGn is information PGa, PGb (see FIG. 1) regarding the plurality of electric power gas conversion parts 21a, 21b which produce gas using the electric power supplied from the plurality of electric power supply parts 10a, 10b.

The gas demand information DGn is information DGa, DGb (see FIG. 1) regarding the plurality of gas demand parts 30a, 30b which are supplied with gas from the plurality of electric power gas conversion parts 21.

[B-2] Planning part 14

In the energy management system 1, the planning part 14 is provided to create an electric power distribution plan X1 and a gas distribution plan X2 as illustrated in FIG. 2. The planning part 14 includes an arithmetic unit so that the arithmetic unit performs arithmetic processing using a program to create the electric power distribution plan X1 and the gas distribution plan X2.

The electric power distribution plan X1 is a plan regarding the electric power to be distributed from the plurality of electric power supply parts 10a, 10b to the plurality of electric power gas conversion parts 21a, 21b.

The gas distribution plan X2 is a plan regarding the gas to be distributed from the plurality of electric power gas conversion parts 21a, 21b to the plurality of gas demand parts 30a, 30b.

Though details will be explained later, the planning part 14 creates the electric power distribution plan X1 and the gas distribution plan X2 so that an evaluation value evaluated based on the information acquired by the information acquisition part 11 becomes an optimum value. Here, the creation of the electric power distribution plan X1 and the gas distribution plan X2 is performed for a decided period. For example, the creation of the electric power distribution plan X1 and the gas distribution plan X2 is performed for a future period.

The electric power distribution plan X1 created by the planning part 14 is then output to an external control unit (not illustrated) which controls the distribution of the electric power from the plurality of electric power supply parts 10a, 10b to the plurality of electric power gas conversion parts 21a, 21b. Thus, each of the plurality of electric power supply parts 10a, 10b distributes the electric power to each of the plurality of electric power gas conversion parts 21a, 21b according to the electric power distribution plan X1. In other words, the electric power to be used for the production of gas by the electric power gas conversion part 21a is supplied from each of the plurality of electric power supply parts 10a, 10b to the electric power gas conversion part 21a according to the electric power distribution plan X1. Similarly, the electric power to be used for the production of gas by the electric power gas conversion part 21b is supplied from each of the plurality of electric power supply parts 10a, 10b to the electric power gas conversion part 21b according to the electric power distribution plan X1.

Besides, the gas distribution plan X2 created by the planning part 14 is output to the external control unit which controls the distribution of the gas from the plurality of electric power gas conversion parts 21a, 21b to the plurality of gas demand parts 30a, 30b. Thus, each of the plurality of electric power gas conversion parts 21a, 21b distributes the gas to each of the plurality of gas demand parts 30a, 30b according to the gas distribution plan X2. In other words, the gas demanded by the gas demand part 30a is supplied from each of the plurality of electric power gas conversion parts 21a, 21b to the gas demand part 30a according to the gas distribution plan X2. Similarly, the gas demanded by the gas demand part 30b is supplied from each of the plurality of electric power gas conversion parts 21a, 21b to the gas demand part 30b according to the gas distribution plan X2.

[C] Plan creating method

Hereinafter, an example of a method of executing the creation of the electric power distribution plan X1 and the gas distribution plan X2 in the planning part 14 of the energy management system 1 will be explained.

When performing the creation of the electric power distribution plan X1 and the gas distribution plan X2, the planning part 14 first executes the calculation of an evaluation value EV based on the information acquired by the information acquisition part 11.

The evaluation value EV is, for example, a cost evaluation value COST regarding the cost. The cost evaluation value COST is calculated, for example, by functions indicated in the following (Equation A1).

$$\text{(Equation A1)}$$

$$EV = COST = \Sigma\, Vse\,(SEn) - \Sigma\, Vpg\,(PGn) - \Sigma\, Vdg\,(DGn)$$

In (Equation A1), the function Vse (SEn) is a function of the procured electric power information SEn (SEa, SEb) regarding the plurality of electric power supply parts 10n (n = a, b). For example, the procured electric power information SEn (SEa, SEb) is information on the electric energy (Wh) procured by the plurality of electric power supply parts 10n, and the function Vse (SEn) is, for example, a function regarding the expenditure calculated by multiplying the electric energy (Wh) by a payment unit price (yen/Wh). Here, the payment unit price (yen/Wh) is set according to the electric power procurement price, the electric power wheeling charge, the levy, the market fee, and so on. The electric energy (Wh) procured by the plurality of electric power supply parts 10n and the payment unit price (yen/Wh) may be predicted values. Further, in (Equation A1), "Σ Vse (SEn)" represents the sum of the function Vse (SEa) of the procured electric power information SEa regarding the electric power supply part 10a and the function Vse (SEb) of the procured electric power information SEb regarding the electric power supply part 10b.

In (Equation A1), the function Vpg (PGn) is a function of the gas conversion information PGn (PGa, PGb) regarding the plurality of electric power gas conversion parts 21n (n = a, b). For example, the gas conversion information PGn (PGa, PGb) is information on the electric energy (Wh) to be sold to the supply and demand adjustment market as a DR (demand response) by the plurality of electric power gas conversion parts 21n, and the function Vpg (PGn) is, for example, a function regarding the income amount calculated by multiplying the electric energy (Wh) by a sales unit price (yen/Wh). The electric energy (Wh) to be sold to the supply and demand adjustment market and the sales unit price (yen/Wh) may be predicted values. Further, in (Equation A1), "Σ Vpg (PGn)" represents the sum of the function Vpg (PGa) of the gas conversion information PGa regarding the electric power gas conversion part 21a and the function Vpg (PGb) of the gas conversion information PGb regarding the electric power gas conversion part 21b.

In (Equation A1), the function Vdg (DGn) is a function of the gas demand information DGn (DGa, DGb) regarding the plurality of gas demand parts 30n (n = a, b). For example, the gas demand information DGn (DGa, DGb) is information on the gas demand (m$^3$) in the plurality of gas demand parts 30n, and the function Vdg (DGn) is, for example, a function regarding the income amount calculated by multiplying the gas demand (m$^3$) by a gas sales unit price (yen/m$^3$). The gas demand (m$^3$) and the gas sales unit price (yen/m$^3$) may be predicted values. Further, in (Equation A1), "Σ Vdg (DGn)" represents the sum of the function Vdg (DGa) of the gas demand information DGa regarding the gas demand part 30a and the function Vdg (DGb) of the gas demand information DGb regarding the gas demand part 30b.

The functions used in the evaluation value EV as in (Equation A1) may be updated as necessary according to, for example, the result of learning.

The evaluation value EV is calculated, for example, for each of plan unit times TU during which the electric power distribution plan X1 and the gas distribution plan X2 are performed. Further, the calculation of the evaluation value is executed for each of a plurality of distribution patterns made by combining a plurality of electric power distribution patterns of distributing the electric power from the plurality of electric power supply parts 10a, 10b to the plurality of electric power gas conversion parts 21a, 21b and a gas distribution pattern of distributing the gas from the plurality of electric power gas conversion parts 21a, 21b to the plurality of gas demand parts 30a, 30b. Note that the electric power distribution pattern is decided in consideration of the efficiency of the electric power supply, and the gas distribution pattern is decided in consideration of the efficiency of the gas supply. Further, each of the distribution patterns is decided in consideration of various factors such as regional characteristics, weather conditions, power system status (such as available capacity), gas distribution network status (traffic congestion at delivery), and so on.

In the case where the evaluation value EV is the cost evaluation value COST, the optimum value of the cost evaluation value COST is the minimum value indicating that the cost is minimum. Therefore, the planning part 14 selects a distribution pattern in which the cost evaluation value COST calculated as above is the minimum value among the plurality of distribution patterns, as the electric power distribution plan X1 and the gas distribution plan X2.

[D] Summary

As in the above, in the energy management system 1 in this embodiment, the evaluation values EV are evaluated for a plurality of distribution patterns based on the information including the procured electric power information SEn, the gas conversion information PGn, and the gas demand information DGn, and a distribution pattern in which the evaluation values EV becomes the optimum value among the plurality of distribution patterns for which the evaluation values EV are obtained is created as the electric power distribution plan X1 and the gas distribution plan X2. In the case where the evaluation value EV is the cost evaluation value COST as in this embodiment, a distribution pattern in which the cost evaluation value COST is the minimum value is created as the electric power distribution plan X1 and the gas distribution plan X2. Therefore, in this embodiment, the energy generation, the energy supply, and so on can be performed efficiently in terms of cost.

[E] Modification Examples

[E-1] Modification Example 1-1

The case where the evaluation value EV is the cost evaluation value COST is explained in the above embodiment, but the present invention is not limited to this. The evaluation value EV may be an environmental evaluation value ENVR regarding the environment.

The environmental evaluation value ENVR is calculated, for example, by functions indicated in the following (Equation A2).

$$(\text{Equation A2})$$

$$EV = ENVR = \Sigma \, Yse \, (SEn) - \Sigma \, Ypg \, (PGn) - \Sigma \, Ydg \, (DGn)$$

In (Equation A2), the function Yse (SEn) is a function of the procured electric power information SEn (SEa, SEb) regarding the plurality of electric power supply parts 10n (n = a, b). For example, the procured electric power information SEn (SEa, SEb) is information on the kind of electric power procured by the plurality of electric power supply parts 10n and the electric energy (Wh), and the function Yse (SEn) is, for example, a function regarding the environmental load calculated by multiplying the electric energy (Wh) of the electric power generated by energy other than renewable energy by a $CO_2$ emission factor corresponding to the power generation method of the electric power and multiplying the electric energy (Wh) of the electric power generated by renewable energy by zero. Further, in (Equation A2), "$\Sigma$ Yse (SEn)" represents the sum of the function Yse (SEa) of the procured electric power information SEa regarding the electric power supply part 10a and the function Yse (SEb) of the procured electric power information SEb regarding the electric power supply part 10b.

In (Equation A2), the function Ypg (PGn) is a function of the gas conversion information PGn (PGa, PGb) regarding the plurality of electric power gas conversion parts 21n (n = a, b). For example, the gas conversion information PGn (PGa, PGb) is information on the electric energy (Wh) of the electric power to be sold to the supply and demand adjustment market as a DR (demand response) by the plurality of electric power gas conversion parts 21n. The function Vpg (PGn) is, for example, a function regarding the environmental load, for obtaining the value of absorbing the electric power generated by renewable energy and preventing the suppression of the power generation output by renewable energy, for example, by performing an up-DR. In addition to this, the function Vpg (PGn) may be a function regarding the environmental load, for obtaining the $CO_2$ emission reduced by replacing the role of the supply and demand adjustment of the electric power performed at the thermal power station. Further, in (Equation A2), "$\Sigma$ Ypg (PGn)" represents the sum of the function Ypg (PGa) of the gas conversion information PGa regarding the electric power gas conversion part 21a and the function Ypg (PGb) of the gas conversion information PGb regarding the electric power gas conversion part 21b.

In (Equation A2), the function Ydg (DGn) is a function of the gas demand information DGn (DGa, DGb) regarding the plurality of gas demand parts 30n (n = a, b). For example, the gas demand information DGn (DGa, DGb) is information on the gas demand ($m^3$) in the plurality of gas demand parts 30n, and the function Ydg (DGn) is, for example, a function regarding the environmental load, for obtaining the $CO_2$ emission reduced according to the gas demand ($m^3$). Further, in (Equation A2), "$\Sigma$ Ydg (DGn)" represents the sum of the function Ydg (DGa) of the gas demand information DGa regarding the gas demand part 30a and the function Ydg (DGb) of the gas demand information DGb regarding the gas demand part 30b.

In the case where the evaluation value EV is the environmental evaluation value ENVR, the optimum value of the environmental evaluation value ENVR is the minimum value indicating that the environmental load is minimum. Therefore, the planning part 14 selects a distribution pattern in which the environmental evaluation value ENVR calculated as above is the minimum value among the plurality of distribution patterns, as the electric power distribution plan X1 and the gas distribution plan X2.

Further, the evaluation value EV may be an additional value of the cost evaluation value COST and the environmental evaluation value ENVR as indicated in the following Equation (A3). In the calculation of the evaluation value EV, the cost evaluation value COST and the environmental evaluation value ENVR may be multiplied by weighting factors, respectively.

$$\text{(Equation A3)}$$

$$EV = COST + ENVR$$

[E-2] Modification Example 1-2

The case where the plurality of electric power supply parts 10a, 10b, the plurality of electric power gas conversion parts 21a, 21b, and the plurality of gas demand parts 30a, 30b actually exist and the information acquisition part 11 of the energy management system 1 acquires information from the actually existing parts is explained in the above embodiment, but the present invention is not limited to this.

The plurality of electric power supply parts 10a, 10b, the plurality of electric power gas conversion parts 21a, 21b, and the plurality of gas demand parts 30a, 30b may be virtual models, and the information acquired by the information acquisition part 11 may include virtual data regarding the virtual models. This can execute a simulation regarding the virtual models. As a result, it is possible to verify, for example, at the design stage, the installation of wasteful facilities, insufficient facility capacity, insufficient transmission capacity, insufficient communication capacity, and so on. Further, investigation of the virtual models assumed to have an abnormality occurred makes it possible to grasp the problem in advance.

[E-3] Other Modification Example

Further, the case where the electric power is supplied from each of the plurality of electric power supply parts 10a, 10b to each of the plurality of electric power gas conversion parts 21a, 21b is explained in this embodiment, but the present invention is not limited to this. Also in a case where the electric power is distributed and supplied from a single electric power supply part (for example, 10a) to each of the plurality of electric power gas conversion parts 21a, 21b, the plans can be performed as in the above embodiment.

<Second Embodiment>

[A] Configuration

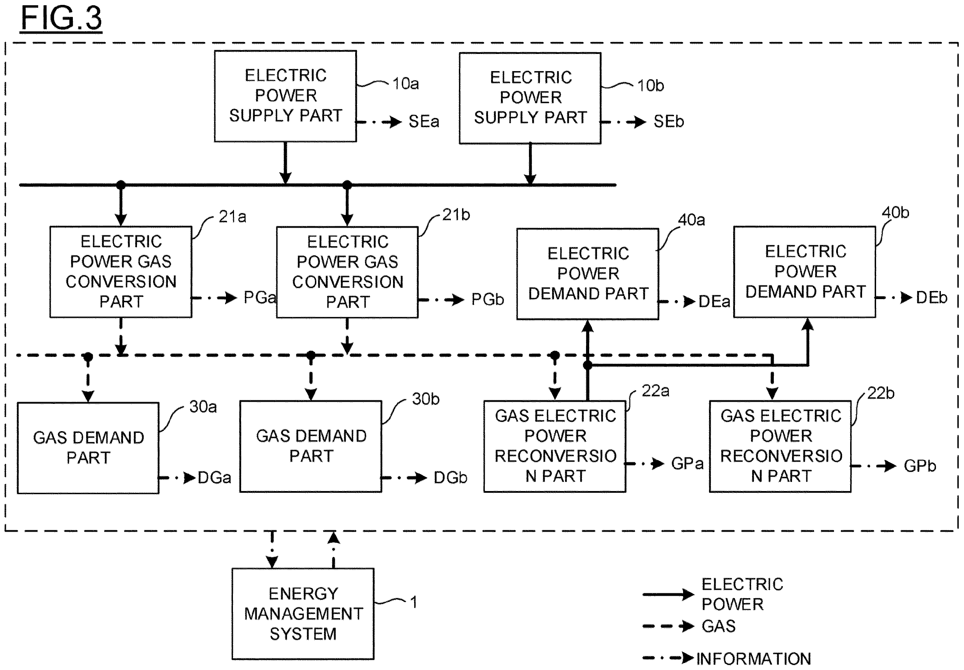

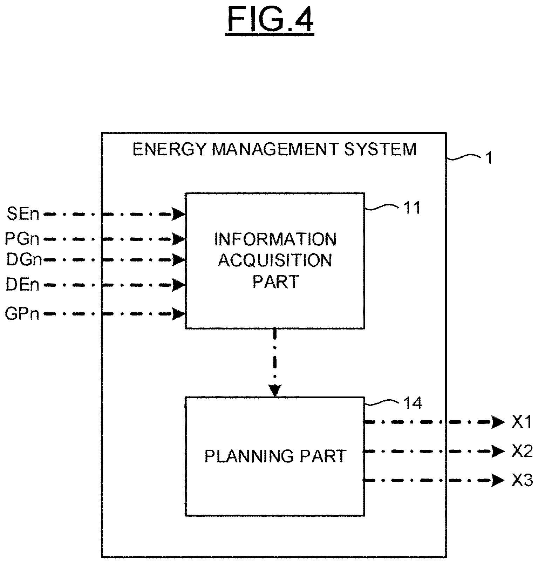

FIG. 3 is a block diagram schematically illustrating the overall configuration including an energy management system 1 according to a second embodiment. FIG. 4 is a block diagram schematically illustrating the energy management system 1 according to the second embodiment.

As illustrated in FIG. 3 and FIG. 4, the energy management system 1 in this embodiment is configured to receive information from parts such as a plurality of electric power supply parts 10a, 10b, a plurality of electric power gas conversion parts 21a, 21b, and a plurality of gas demand parts 30a, 30b and, unlike the first embodiment, a plurality of gas electric power reconversion parts 22a, 22b and a plurality of electric power demand parts 40a, 40b, and to output information to the parts. This embodiment is the same as the first embodiment except for this point and related points. Therefore, explanation of duplicate items is appropriately omitted.

[A-1] Gas electric power reconversion parts 22a, 22b

The gas produced in the plurality of electric power gas conversion parts 21a, 21b is supplied to the plurality of gas electric power reconversion parts 22a, 22b in addition to the plurality of gas demand parts 30a, 30b. The plurality of gas electric power reconversion parts 22a, 22b are provided to reconvert the gas produced in the plurality of electric power gas conversion parts 21a, 21b to electric power. The plurality of gas electric power reconversion parts 22a, 22b include, for example, fuel cell devices and are configured such that the fuel cell devices generate electric power using the hydrogen gas supplied from the plurality of electric power gas conversion parts 21a, 21b. Further, each of the plurality of gas electric power reconversion parts 22a, 22b is configured to supply the electric power to each of the plurality of electric power demand parts 40a, 40b.

[A-2] Electric power demand parts 40a, 40b

The plurality of electric power demand parts 40a, 40b are supplied with the electric power obtained by reversion in the plurality of gas electric power reconversion parts 22a, 22b. The plurality of electric power demand parts 40a, 40b include, for example, electrical devices which are driven by electric power.

[A-3] Energy management system 1

The energy management system 1 has an information acquisition part 11 and a planning part 14 as illustrated in FIG. 4.

However, in the energy management system 1 in this embodiment, the information acquisition part 11 is configured to acquire information including procured electric power information SEn, gas conversion information PGn, gas demand information DGn and, in addition, gas electric power reconversion information GPn, and power demand information DEn as illustrated in FIG. 4.

The gas electric power reconversion information GPn is information GPa, GPb (see FIG. 3) regarding the plurality of gas electric power reconversion parts 22a, 22b which reconvert the gas produced in the plurality of electric power gas conversion parts 21a, 21b to electric power.

The electric power demand information DEn is information DEa, DEb (see FIG. 3) regarding the plurality of electric power demand parts 40a, 40b which are supplied with the electric power reconverted in the plurality of gas electric power reconversion parts 22a, 22b.

In the energy management system 1 in this embodiment, the planning part 14 is provided to create a reconverted electric power distribution plan X3 in addition to the electric power distribution plan X1 and the gas distribution plan X2 as illustrated in FIG. 4.

In this embodiment, the gas distribution plan X2 includes a plan regarding the gas to be distributed from the plurality of electric power gas conversion parts 21a, 21b to the plurality of gas demand parts 30a, 30b and a plan regarding the gas to be distributed from the plurality of electric power gas conversion parts 21a, 21b to the plurality of gas electric power reconversion parts 22a, 22b.

The reconverted electric power distribution plan X3 is a plan regarding the electric power to be distributed from the plurality of gas electric power reconversion parts 22a, 22b to the plurality of electric power demand parts 40a, 40b.

Also in this embodiment, the planning part 14 creates the electric power distribution plan X1, the gas distribution plan X2, and the reconverted electric power distribution plan X3 so that the evaluation value evaluated based on the information acquired by the information acquisition part 11 becomes an optimum value. Here, the creation of the electric power distribution plan X1, the gas distribution plan X2, and the reconverted electric power distribution plan X3 is performed for a decided period. The plans are executed, for example, for a future period.

The electric power distribution plan X1 created by the planning part 14 is then output to an external control unit (not illustrated) as in the first embodiment. Thus, each of the plurality of electric power supply parts 10a, 10b distributes the electric power to each of the plurality of electric power gas conversion parts 21a, 21b according to the electric power distribution plan X1.

The gas distribution plan X2 created by the planning part 14 is output to the external control unit which controls the distribution of the gas from the plurality of electric power gas conversion parts 21a, 21b to the plurality of gas demand parts 30a, 30b and the plurality of gas electric power reconversion parts 22a, 22b. Thus, each of the plurality of electric power gas conversion parts 21a, 21b distributes the gas to each of the plurality of gas demand parts 30a, 30b and the plurality of gas electric power reconversion parts 22a, 22b according to the gas distribution plan X2.

The reconverted electric power distribution plan X3 created by the planning part 14 is output to the external control unit which controls the distribution of the electric power from the plurality of gas electric power reconversion parts 22a, 22b to the plurality of electric power demand parts 40a, 40b. Thus, each of the plurality of gas electric power reconversion parts 22a, 22b distributes the electric power to each of the plurality of electric power demand parts 40a, 40b according to the reconverted electric power distribution plan X3 .

[B] Plan creating method

Hereinafter, an example of a method of executing the creation of the electric power distribution plan X1, the gas distribution plan X2, and the reconverted electric power distribution plan X3 in the planning part 14 of the energy management system 1 in this embodiment will be explained.

When performing the creation of the electric power distribution plan X1, the gas distribution plan X2, and the reconverted electric power distribution plan X3, the planning part 14 first executes the calculation of an evaluation value EV based on the information acquired by the information acquisition part 11.

The evaluation value EV is, for example, a cost evaluation value COST regarding the cost as in the first embodiment. The cost evaluation value COST is calculated, for example, by functions indicated in the following (Equation A2) in this embodiment.

(Equation B1)

$$EV = COST = \Sigma\, Vse\, (SEn) - \Sigma\, Vpg\, (PGn) - \Sigma\, Vdg\, (DGn) - \Sigma\, Vgp\, (GPn) - \Sigma\, Vde\, (DEn)$$

In (Equation B 1), the function Vse (SEn), the function Vpg (PGn), and the function Vdg (DGn) are the same as in (Equation A1) used in the first embodiment.

In (Equation B 1), the function Vgp (GPn) is a function of the gas electric power reconversion information GPn (GPa, GPb) regarding the plurality of gas electric power reconversion parts 22n (n = a, b). For example, the gas electric power reconversion information GPn (GPa, GPb) is information on the electric energy (Wh) to be sold to the supply and demand adjustment market as a DR (demand response) by the plurality of gas electric power reconversion parts 22n, and the function Vgp (GPn) is, for example, a function regarding the income amount calculated by multiplying the electric energy (Wh) by a sales unit price (yen/Wh). The electric energy (Wh) to be sold to the supply and demand adjustment market and the sales unit price (yen/Wh) may be predicted values. Further, in (Equation A2), "Σ Vgp (GPn)" represents the sum of the function Vgp (GPa) of the gas electric power reconversion information GPa regarding the gas electric power reconversion part 22a and the function Vgp (GPb) of the gas electric power reconversion information GPb regarding the gas electric power reconversion part 22b.

In (Equation B 1), the function Vde (DEn) is a function of the electric power demand information DEn (DEa, DEb) regarding the plurality of electric power demand parts 40n (n = a, b). For example, the electric power demand information DEn (DEa, DEb) is information on the electric energy (Wh) to be sold to the supply and demand adjustment market as a DR (demand response) by the plurality of electric power demand parts 40n, and the function Vde (DEn) is, for example, a function regarding the income amount calculated by multiplying the electric energy (Wh) by a sales unit price (yen/Wh). The electric energy (Wh) to be sold to the supply and demand adjustment market and the sales unit price (yen/Wh) may be predicted values. Further, in (Equation A2), "Σ Vde (DEn)" represents the sum of the function Vde (DEa) of the electric power demand information DEa regarding the electric power demand part 40a and the function Vde (DEb) of the electric power demand information DEb regarding the electric power demand part 40b.

The evaluation value EV is calculated, for example, for each of plan unit times TU during which the electric power distribution plan X1, the gas distribution plan X2, and the reconverted electric power distribution plan X3 are performed. Further, the calculation of the evaluation value is executed for each of a plurality of distribution patterns made by combining a plurality of electric power distribution patterns of distributing the electric power from the plurality of electric power supply parts 10a, 10b to the plurality of electric power gas conversion parts 21a, 21b, a gas distribution pattern of distributing the gas from the plurality of electric power gas conversion parts 21a, 21b to the plurality of gas demand parts 30a, 30b and the plurality of gas electric power reconversion parts 22a, 22b, and a plurality of electric power distribution patterns of distributing the electric power from the plurality of gas electric power reconversion parts 22a, 22b to the plurality of electric power demand parts 40a, 40b. Note that the electric power distribution pattern is decided in consideration of the efficiency of the electric power supply, and the gas distribution pattern is decided in consideration of the efficiency of the gas supply.

In the case where the evaluation value EV is the cost evaluation value COST, the optimum value of the cost evaluation value COST is the minimum value indicating that the cost is minimum. Therefore, the planning part 14 selects a distribution pattern in which the cost evaluation value COST calculated as above is the minimum value among the plurality of distribution patterns, as the electric power distribution plan X1, the gas distribution plan X2, and the reconverted electric power distribution plan X3.

[C] Summary

As in the above, in the energy management system 1 in this embodiment, the evaluation values EV are evaluated for a plurality of distribution patterns based on the information including the procured electric power information SEn, the gas conversion information PGn, the gas demand information DGn, the gas electric power reconversion information (GP), and the electric power demand information (DEn), and a distribution pattern in which the evaluation value EV becomes the optimum value among the plurality of distribution patterns for which the evaluation values EV are obtained is created as the electric power distribution plan X1, the gas distribution plan X2, and the reconverted electric power distribution plan X3. In the case where the evaluation value EV is the cost evaluation value COST as in this embodiment, a distribution pattern in which the cost evaluation value COST is the minimum value is created as the electric power distribution plan X1, the gas distribution plan X2, and the reconverted electric power distribution plan X3. Therefore, in this embodiment, the energy generation, the energy supply, and so on can be performed efficiently in terms of cost.

**[D]** Modification Examples

[D-1] Modification Example 2-1

The case where the evaluation value EV is the cost evaluation value COST is explained in the above embodiment, but the present invention is not limited to this. The evaluation value EV may be an environmental evaluation value ENVR regarding the environment as in the first embodiment.
In this embodiment, the environmental evaluation value ENVR is calculated, for example, by functions indicated in the following (Equation B2).

$$\text{(Equation B2)}$$

$$EV = ENVR = \Sigma\, Yse\, (SEn) - \Sigma\, Ypg\, (PGn) - \Sigma\, Ydg\, (DGn) - \Sigma\, Vgp\, (GPn) - \Sigma\, Vde\, (DEn)$$

In (Equation B2), the function Yse (SEn), the function Ypg (PGn), and the function Ydg (DGn) are the same as in (Equation A2) used in the first embodiment.
In (Equation B2), the function Vgp (GPn) is a function of the gas electric power reconversion information GPn (GPa, GPb) regarding the plurality of gas electric power reconversion parts 22n (n = a, b). For example, the gas electric power reconversion information GPn (GPa, GPb) is information on the electric energy (Wh) of the electric power to be sold to the supply and demand adjustment market as a DR (demand response) by the plurality of gas electric power reconversion parts 22n. The function Vgp (GPn) is a function regarding the environmental load, for obtaining the $CO_2$ emission reduced by replacing the role of the supply and demand adjustment of the electric power performed at the thermal power station. Further, in (Equation B2), "$\Sigma$ Vgp (GPn)" represents the sum of the function Ygp (GPa) of the gas electric power reconversion information GPa regarding the gas electric power reconversion part 22a and the function Ygp (GPb) of the gas electric power reconversion information GPb regarding the gas electric power reconversion part 22b.
In (Equation B2), the function Yde (DEn) is a function of the electric power demand information DEn (DEa, DEb) regarding the plurality of electric power demand parts 40n (n = a, b). For example, the electric power demand information DEn (DEa, DEb) is information on the electric energy (Wh) of the electric power to be sold to the supply and demand adjustment market as a DR (demand response) by the plurality of electric power demand parts 40n. The function Yde (DEn) is a function regarding the environmental load, for obtaining the value of absorbing the electric power generated by renewable energy and preventing the suppression of the power generation output by renewable energy by performing, for example, an up-DR. In addition to this, the function Yde (DEn) may be a function regarding the environmental load, for obtaining the $CO_2$ emission reduced by replacing the role of the supply and demand adjustment of the electric power performed at the thermal power station. Further, in (Equation B2), "$\Sigma$ Yde (DEn)" represents the sum of the function Yde (DEa) of the electric power demand information DEa regarding the electric power demand part 40a and the function Vde (DEb) of the electric power demand information DEb regarding the electric power demand part 40b.
In the case where the evaluation value EV is the environmental evaluation value ENVR, the optimum value of the environmental evaluation value ENVR is the minimum value indicating that the environmental load is minimum. Therefore, the planning part 14 selects a distribution pattern in which the environmental evaluation value ENVR calculated as above is the minimum value among the plurality of distribution patterns, as the electric power distribution plan X1, the gas distribution plan X2, and the reconverted electric power distribution plan X3.
Also in this embodiment, the evaluation value EV may be an additional value of the cost evaluation value COST and the environmental evaluation value ENVR as already indicated in Equation (A3). In the calculation of the evaluation value EV, the cost evaluation value COST and the environmental evaluation value ENVR may be multiplied by weighting factors, respectively.

[D-2] Modification Example 2-2

The case where the plurality of electric power supply parts 10a, 10b, the plurality of electric power gas conversion parts 21a, 21b, the plurality of gas demand parts 30a, 30b, the plurality of gas electric power reconversion parts 22a, 22b, and the plurality of electric power demand parts 40a, 40b actually exist and the information acquisition part 11 of the energy management system 1 acquires information from the actually existing parts is explained in the above embodiment, but the present invention is not limited to this. Also in this embodiment, the parts may be virtual models and the information acquired by the information acquisition part 11 may include virtual data regarding the virtual models.

[D-3] Modification Example 2-3

The case where the electric power is supplied from the plurality of gas electric power reconversion parts 22a, 22b to the plurality of electric power demand parts 40a, 40b is explained in this embodiment, but the present invention is not limited to this. Also in a case where the electric power is distributed and supplied from a single gas electric power reconversion part (for example, 22a) to each of the plurality of electric power demand parts 40a, 40b, the plans can be performed as in the above embodiment.

<Third Embodiment>

[A] Plan target period

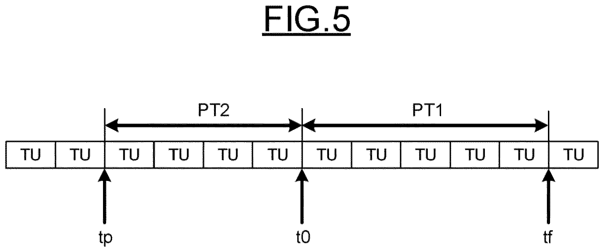

FIG. 5 is a chart schematically illustrating a plan target period for which a planning part 14 of an energy management system 1 according to a third embodiment creates plans.
In the above embodiment, a plan target period PT for which the planning part 14 (see FIG. 2, FIG. 4) creates the plans is a period PT1 that is in the future from a plan creation time t0.
However, in this embodiment, the plan target period PT includes a period PT2 that is in the past from the plan creation time in addition to the period PT1 that is in the future from the plan creation time, unlike the above embodiments. Here, the future period PT1 includes a plurality of plan unit times TU present between the plan creation time t0 and a future time tf. The past period PT2 includes a plurality of plan unit times TU present between the plan creation time t0 and a past time tp. The planning part 14 creates plans for each of the plurality of plan unit times TU included in the future period PT1 and the past period PT2. The planning part 14 creates plans using the actual result data when they were actually executed in the past period PT2, for the plan unit times TU included in the past period PT2, unlike the case of the plan unit times TU included in the future period PT1. The actual result data is acquired in an actual result acquisition time (for example, 1 second) shorter than the plan unit time TU (for example, 30 minutes). Therefore, the planning part 14 averages a plurality of pieces of actual result data each acquired for every actual result acquisition time, for example, in the plan unit time TU in the past period PT2 for instance to create plans for the past period PT2.

[B] Summary

As in the above, in this embodiment, the planning part 14 creates plans for the plan target period PT including the period PT1 that is in the future from the plan creation time t0 and the period PT2 that is in the past from the plan creation time t0. As explained above, in this embodiment, the plans are made for the same plan unit time TU in the future period PT1 and the past period PT2. Therefore, in this embodiment, the same data processing can be performed on both the plans for the future period PT1 and the plans for the past period PT2, eliminating the need for redundant processing. Further, in this embodiment, the plans for the past period PT2 are created using the actual result data, so that it is unnecessary to confirm whether they coincide with the plans in the data processing.

<Other>

While certain embodiments of the present invention have been described, these embodiments have been presented by way of example only, and are not intended to limit the scope of the inventions. These novel embodiments described herein may be embodied in a variety of other forms; furthermore, various omissions, substitutions and changes may be made therein without departing from the spirit of the inventions. The accompanying claims and their equivalents are intended to cover such forms or modifications as would fall within the scope and spirit of the inventions.

REFERENCE SIGNS LIST

1: energy management system, 10a: electric power supply part, 10b: electric power supply part, 11: information acquisition part, 14: planning part, 21a: electric power gas conversion part, 21b: electric power gas conversion part, 22a: gas electric power reconversion part, 22b: gas electric power reconversion part, 30a: gas demand part, 30b: gas demand part, 40a: electric power demand part, 40b: electric power demand part, DEa: electric power demand information, DEb: electric power demand information, DGa: gas demand information, DGb: gas demand information, GPa: gas electric power reconversion information, GPb: gas electric power reconversion information, PGa: gas conversion information, PGb: gas conversion information, PT: plan target period, PT1: period, PT2: period, SEa: procured electric power information, SEb: procured electric power information, X1: electric power distribution plan, X2: gas distribution plan, X3: reconverted electric power distribution plan

**Claims**

1. An energy management system, comprising:

   an information acquisition part configured to acquire information including procured electric power information regarding an electric power supply part which procures electric power and supplies the procured electric power, gas conversion information regarding a plurality of electric power gas conversion parts which produce gas using the electric power supplied from the electric power supply part, and gas demand information regarding a plurality of gas demand parts which are supplied with the gas from the plurality of electric power gas conversion parts; and
   a planning part configured to create an electric power distribution plan regarding the electric power to be distributed from the electric power supply part to the plurality of electric power gas conversion parts and a gas distribution plan regarding the gas to be distributed from the plurality of electric power gas conversion parts to the plurality of gas demand parts so that an evaluation value evaluated based on the information acquired by the information acquisition part becomes an optimum value.

2. The energy management system according to claim 1, wherein:

   a plurality of the electric power supply parts are provided; and
   the planning part creates a plan regarding the electric power to be distributed from the plurality of the electric power supply parts to the plurality of electric power gas conversion parts, as the electric power distribution plan.

3. The energy management system according to claim 1 or 2, wherein:

   the information acquisition part acquires gas electric power reconversion information regarding a gas electric power reconversion part which reconverts the gas produced in the electric power gas conversion part to electric power, as the information; and
   the planning part creates a plan regarding the gas to be distributed from the electric power gas conversion part to the gas demand part and the gas electric power reconversion part, as the gas distribution plan.

4. The energy management system according to claim 3, wherein:

   the information acquisition part acquires power demand information regarding a plurality of electric power demand parts which are supplied with the electric power reconverted in the gas electric power reconversion part, as the information; and
   the planning part creates a reconverted electric power distribution plan regarding the electric power to be distributed from the gas electric power reconversion part to the plurality of electric power demand parts so that an evaluation value evaluated based on the information acquired by the information acquisition part becomes an optimum value.

5. The energy management system according to any one of claims 1 to 4, wherein
   the evaluation value includes an evaluation value regarding a cost.

6. The energy management system according to any one of claims 1 to 5, wherein
   the evaluation value includes an evaluation value regarding an influence on an environment.

7. The energy management system according to any one of claims 1 to 6, wherein
   the planning part creates the plans for a plan target period including a period that is in a future from a creation time of the plans and a period that is in a past from the creation time of the plans.

8. The energy management system according to any one of claims 1 to 7, wherein
   the information acquired by the information acquisition part includes virtual data.

**FIG.1**

# FIG.2

# FIG.3

ELECTRIC POWER SUPPLY PART — 10a · · → SEa

ELECTRIC POWER SUPPLY PART — 10b · · → SEb

ELECTRIC POWER GAS CONVERSION PART — 21a · · → PGa

ELECTRIC POWER GAS CONVERSION PART — 21b · · → PGb

ELECTRIC POWER DEMAND PART — 40a · · → DEa

ELECTRIC POWER DEMAND PART — 40b · · → DEb

GAS DEMAND PART — 30a · · → DGa

GAS DEMAND PART — 30b · · → DGb

GAS ELECTRIC POWER RECONVERSION PART — 22a · · → GPa

GAS ELECTRIC POWER RECONVERSION PART — 22b · · → GPb

ENERGY MANAGEMENT SYSTEM — 1

→ ELECTRIC POWER

- - → GAS

- · - → INFORMATION

EP 4 451 497 A1

# FIG.4

EP 4 451 497 A1

# FIG.5

Europäisches
Patentamt

European
Patent Office

Office européen
des brevets

# EUROPEAN SEARCH REPORT

Application Number

EP 23 16 8219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/399575 A1 (NAGINO GOSHU [JP]) 23 December 2021 (2021-12-23) * paragraphs [0021], [0019], [0181], [0035], [0017]; claims 1-20; figures 1-7 * | 1-8 | INV. H02J3/14 H02J3/28 |

-----

TECHNICAL FIELDS SEARCHED (IPC)

H02J

The present search report has been drawn up for all claims

| Place of search | Date of completion of the search | Examiner |
|---|---|---|
| Munich | 5 October 2023 | Bourdon, Jérémy |

EPO FORM 1503 03.82 (P04C01)

## ANNEX TO THE EUROPEAN SEARCH REPORT
## ON EUROPEAN PATENT APPLICATION NO.

EP 23 16 8219

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2023

| Patent document cited in search report | | Publication date | Patent family member(s) | | Publication date |
|---|---|---|---|---|---|
| US 2021399575 | A1 | 23-12-2021 | CA | 3132144 A1 | 10-09-2020 |
| | | | CN | 113519104 A | 19-10-2021 |
| | | | EP | 3937346 A1 | 12-01-2022 |
| | | | JP | 7219805 B2 | 08-02-2023 |
| | | | JP | WO2020179849 A1 | 21-10-2021 |
| | | | US | 2021399575 A1 | 23-12-2021 |
| | | | WO | 2020179849 A1 | 10-09-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018142239 A

- JP 2018066549 A